# FASCICULE DE BREVET EUROPEEN

(11) **EP 2 922 801 B1**
(45) Date de publication et mention de la délivrance du brevet: **04.11.2020**
(21) Numéro de dépôt: 13808102.1
(22) Date de dépôt: 25.11.2013
(51) Int. Cl.: C04B 24/02, C04B 24/04, C04B 28/02

(54) **PROCEDE DE PREPARATION D'UN MELANGE MAITRE A BASE DE NANOCHARGES CARBONEES ET DE SUPERPLASTIFIANT, ET SON UTILISATION DANS DES SYSTEMES INORGANIQUES DURCISSABLES**
VERFAHREN ZUR HERSTELLUNG EINER MASTERMISCHUNG AUF DER BASIS VON KOHLENSTOFFHALTIGEN NANOFÜLLSTOFFEN UND SUPERWEICHMACHERN UND VERWENDUNG DAVON IN HÄRTBAREN ANORGANISCHEN SYSTEMEN
METHOD FOR PRODUCING A MASTER MIXTURE BASED ON CARBONACEOUS NANOFILLERS AND SUPERPLASTICISER, AND THE USE THEREOF IN HARDENABLE INORGANIC SYSTEMS

(30) Priorité: 26.11.2012 FR 1261229
(43) Date de publication de la demande: 30.09.2015
(73) Titulaire: Arkema France, 92700 Colombes (FR)
(72) Inventeur: KORZHENKO, Alexander, -64000 Pau (FR); VINCENDEAU, Christophe, 64140 Lons (FR); LUSHNIKOVA, Anna, Izhevsk 426072 (RU); YAKOVLEV, Grigory Ivanovich, Izhevsk 426003 (RU); PERVUSHIN, Grigoriy Nikolayevich, Izhevsk 426069 (RU); PLATEL, David, 01800 Saint Maurice de Gourdans (FR); SUAU, Jean-Marc, 69480 (FR)
(74) Mandataire: Arkema Patent
(86) Numéro de dépôt international: PCT/FR2013/052838
(87) Numéro de publication internationale: WO 2014/080144

(56) Documents cités:
- WO-A1-2009/099640
- FR-A1- 2 969 143

## Description

### Domaine technique

La présente invention concerne les systèmes inorganiques durcissables tels que les ciments, plâtres, céramiques ou silicates liquides, utilisables par exemple dans les domaines du bâtiment, de la construction ou de l'industrie des forages pétroliers.

L'invention concerne plus particulièrement l'utilisation de nanocharges carbonées, telles que des nanotubes de carbone, pour renforcer les propriétés mécaniques et améliorer de tels systèmes.

L'invention porte sur un procédé de préparation d'un mélange-maître à base de nanocharges carbonées, et de superplastifiant, le dit-mélange-maître ainsi obtenu et son utilisation dans un système inorganique durcissable en vue de préparer des matériaux de propriétés améliorées.

L'invention s'applique aux domaines de la construction, du bâtiment, des forages pétroliers.

### Arrière-plan technique et problème technique

Le béton à base de ciment demeure le matériau le plus employé en construction. Malgré l'existence de solutions telles que l'incorporation d'armatures métalliques, il subsiste un besoin constant d'améliorer les propriétés des bétons, que ce soit leur résistance mécanique, leur résistance au vieillissement ou la maîtrise du processus d'hydratation du ciment à la base des bétons.

Il a été mis en évidence dans de précédentes études que l'incorporation de nanotubes de carbone dans des ciments présente de nombreux avantages. En effet les nanotubes de carbone (ou NTC) confèrent des propriétés mécaniques et des propriétés de conduction électrique et/ou thermique améliorées à tout matériau composite les contenant ; en particulier, leurs bonnes propriétés mécaniques et notamment de résistance à l'élongation sont liées en partie à leurs rapports de forme (longueur/diamètre) très élevés.

A titre d'exemple, dans le document US 2008/0134942, l'ajout de nanotubes de carbone à une teneur supérieure à 0,2% combiné à l'ajout de faibles teneurs d'un plastifiant permet de renforcer des ciments en terme de tenue à la compression et à la déformation.

Le document WO 2009/099640 décrit une méthode de préparation de matériaux à base de ciment renforcé, consistant à disperser à l'aide d'ultrasons des nanotubes de carbone dans une solution de tensioactif, dans un rapport tensioactif/NTC compris entre 1,5 et 8, puis à mélanger la dispersion avec un ciment de façon à obtenir un matériau comprenant de 0,02% à 0,1% de nanotubes de carbone par rapport au ciment. Les nanotubes de carbone mis en œuvre ont de préférence un diamètre allant de 20 à 40 nm et une longueur allant de 10 à 100 µm. Les tensioactifs sont de préférence des superplastifiants à base de polycarboxylate. La dispersion de NTC comporte plus de 98% d'eau et une faible teneur en superplastifiant, généralement inférieure à 1%. Cette dispersion est en général utilisée rapidement après sa préparation et n'est pas stockée. Selon ce document, la qualité de la dispersion des NTC au sein du matériau résulte de la qualité de la dispersion des NTC dans la solution de tensioactif obtenue par ultrasons. Les effets obtenus sont l'augmentation du modèle de Young et de la tenue à la flexion ainsi qu'une réduction du phénomène de retrait endogène.

Des résultats similaires sur l'effet des nanotubes de carbone comme renfort de ciment sont décrits dans le document Cements & Concretes composites 32 (2010),110-150.

Selon le document Materials Science and Engeneering A, 527, (2010) 1063-1067, le renfort mécanique résultant de la présence des nanotubes de carbone s'accompagne également de la densification du ciment.

Pervushin et al ont présenté à la conférence internationale « Nano-technology for green and sustainable construction » 14-17 mars 2010, le Caire-Egypte, les résultats obtenus sur le renfort de ciment grâce à l'incorporation de nanotubes de carbone à des taux aussi bas que 0,006% par rapport au ciment, sous forme d'une dispersion aqueuse obtenue par cavitation hydrodynamique à partir de NTC en poudre et d'un superplastifiant. Cette étude montre cependant que ces dispersions de NTC ne sont pas stables au cours du temps et doivent donc être utilisées rapidement pour l'application de renfort de ciment ; en outre, les NTC se présentant généralement sous la forme de grains de poudre agglomérés dont les dimensions moyennes sont de l'ordre de quelques centaines de microns, leur manipulation peut poser des problèmes de sécurité en raison de leur caractère pulvérulent et de leur aptitude à générer des fines dans les ateliers où ils sont utilisés.

Dans la demande de brevet WO 2012/085445, il a été proposé d'introduire dans le système inorganique durcissable, les nanotubes de carbone non pas sous forme de poudre, mais sous forme d'un mélange-maître de nanotubes de carbone contenant un liant polymère. Le procédé consiste à préparer une dispersion dans l'eau de nanocharges carbonées à partir d'un mélange-maitre de nanocharges carbonées et d'un liant polymère, en présence d'au moins un superplastifiant, et à soumettre cette dispersion à un traitement par mélange à haute vitesse, par exemple par sonication, par cavitation des fluides ou à l'aide d'un mélangeur à haut cisaillement Silverson ou un broyeur à billes. La dispersion est introduite telle quelle ou rediluée, dans un système inorganique durcissable, tel qu'un ciment, pour assurer une teneur finale en nanocharges carbonées allant de 0,001 à 0,02% en poids, de préférence de 0,005 à 0,01% par rapport au système inorganique durcissable. Selon ce procédé, le processus de la dispersion reste encore long et difficilement réalisable à une échelle supérieure, et le matériau composite obtenu, tel qu'un béton, comporte une faible teneur d'un liant polymère, qui peut éventuellement en affecter les propriétés.

Par conséquent, l'introduction de nanotubes de carbone dans des matériaux à base de ciment ou tout autre système inorganique durcissable soulève encore quelques points négatifs qui nécessitent d'être améliorés.

Il est donc souhaitable de disposer d'un moyen permettant de distribuer simplement et de façon homogène des nanotubes de carbone au sein d'un matériau à base de ciment ou de tout autre système inorganique durcissable en vue de préparer des matériaux composites de haute résistance mécanique et prévenir les fissures résultant du vieillissement de ces matériaux.

De plus, en raison de leur caractère pulvérulent et de leur aptitude à générer des fines dans les ateliers de fabrication, il est préférable de pouvoir travailler avec des NTC sous forme solide agglomérée de taille macroscopique.

La Demanderesse a découvert que ces besoins pouvaient être satisfaits en introduisant les nanotubes de carbone dans des matériaux à base de ciment ou tout autre système inorganique durcissable, par l'intermédiaire d'un mélange-maître à base de nanotubes de carbone et d'un superplastifiant. En effet, la mise en œuvre d'un superplastifiant est toujours préconisée pour augmenter la compacité et la résistance mécanique des bétons et mortiers, et améliorer leur fluidité et leur manipulation.

La présente invention consiste ainsi à remplacer le superplastifiant par un superplastifiant dopé avec des nanotubes de carbone dans les procédés et dispositifs de fabrication existants de l'industrie du bâtiment et de la construction, et aussi dans le domaine pétrolier.

Le procédé d'introduction des nanotubes de carbone selon la présente invention est simple, rapide et facile à mettre en œuvre d'un point du vue industriel tout en respectant les contraintes d'hygiène et sécurité. Il ne nécessite pas de modification des procédés classiques de fabrication des matériaux composites à base de systèmes inorganiques durcissables qui utilisent déjà un superplastifiant comme additif dispersant haut réducteur d'eau, tout en conduisant à des matériaux plus denses et renforcés mécaniquement.

Il est par ailleurs apparu à la Demanderesse que cette invention pouvait également être appliquée à d'autres nanocharges carbonées que les nanotubes de carbone et en particulier aux nanofibres de carbone et aux graphènes.

### Résumé de l'invention

La présente invention a donc pour objet un procédé de préparation d'un mélange-maître comprenant au moins un superplastifiant et de 0,1% à 25% de nanocharges carbonées, exprimés par rapport au poids total du mélange-maître, comprenant :
(i) l'introduction dans un malaxeur, puis le malaxage, de nanocharges carbonées et d'au moins un superplastifiant, éventuellement en présence d'un agent dispersant hydrosoluble, pour former un mélange homogène sous forme solide ou sous forme de composition pâteuse ;
(ii) l'extrusion dudit mélange sous forme solide pour obtenir un mélange-maître sous forme solide ;
(iii) éventuellement, la dispersion dudit mélange-maître sous forme solide dans un superplastifiant identique ou différent de celui de l'étape (i), ou dans un dispersant hydrosoluble, pour obtenir un mélange maître sous forme d'une composition pâteuse ;
(iv) éventuellement, l'introduction du mélange maître sous forme d'une composition pâteuse obtenu à l'étape (i) ou à l'étape (iii), dans un superplastifiant, identique ou différent de celui de l'étape (i) ou de celui de l'étape (iii), pour obtenir un mélange maître comprenant de 0,1% à 2% en masse de nanocharges carbonées.

Selon un mode de réalisation du procédé selon l'invention, l'étape (i) conduit directement à la préparation d'un mélange-maître sous forme d'une composition pâteuse, ledit procédé pouvant comprendre en outre directement l'étape (iv) pour obtenir un mélange-maître à faible teneur en nanocharges carbonées.

L'invention porte aussi sur un mélange-maître comprenant au moins un superplastifiant et des nanocharges carbonées à un taux massique compris entre 0,1% et 25%, de préférence entre 0,2% et 20%, par rapport au poids total du mélange-maître, susceptible d'être obtenu selon ledit procédé.

Un autre objet de l'invention est un procédé d'introduction de nanocharges carbonées dans un système inorganique durcissable, comprenant au moins l'étape d'introduction d'eau, et d'un mélange maître tel que décrit précédemment, séparément ou en mélange, dans un appareillage de malaxage comprenant au moins un système inorganique durcissable, pour assurer une teneur en nanocharges carbonées allant de 0,0001% à 0,02%, de préférence de 0,0005% à 0,01% en poids par rapport au système inorganique durcissable, et un rapport massique eau/système inorganique durcissable allant de 0,2 à 1,5, de préférence de 0,2 à 0,7.

L'invention porte aussi sur les matériaux composites à base de systèmes inorganiques durcissables, susceptibles d'être obtenus selon ce procédé, et sur leurs utilisations dans le domaine de la construction et du bâtiment pour préparer des mortiers pour maçonneries, enduits intérieurs et extérieurs, pour fabriquer des produits de construction structuraux, et dans le domaine de l'industrie pétrolière pour les applications de forage.

Un autre objet de l'invention est l'utilisation d'un mélange maître à base d'au moins un superplastifiant et de 0,1% à 25% en masse de nanocharges carbonées, par rapport au poids total du mélange-maître, pour améliorer la résistance au gel et à la diffusion de liquide d'un système inorganique durcissable, tel qu'un ciment, ou pour améliorer l'adhésion entre un système inorganique durcissable et les armatures métalliques ou non métalliques ou les renforts sous la forme de fibres minérales ou les renforts à base de polymères, dans des produits de construction structuraux, ou pour réduire les phénomènes de micro fissuration dus aux diverses contraintes dans des produits de construction structuraux.

### Description détaillée

L'invention concerne le domaine des systèmes inorganiques durcissables, c'est-à-dire les matières inorganiques comme les bases cimentières, qui, après gâchage avec de l'eau, durcissent aussi bien à l'air que dans l'eau. Les agglomérés de ces matières, qui en résultent, tels que les bétons, résistent à l'eau et présentent une résistance à la compression.

Il s'agit notamment de tout type de bases cimentières, comme décrit dans la norme EN-197-1-2000, en particulier le ciment type Portland, le ciment Portland composé par exemple au calcaire, au laitier, aux cendres volantes, à la pouzzolane, au schiste calciné, à la fumée de silice, le ciment de haut fourneau, le ciment pouzzolanique, le ciment de magnésium, ou autre ciment base anhydrite tel que le ciment fluoroanhydrite, utilisés seuls ou en mélange, qui constituent les bétons, mais aussi les matières telles que le gypse à la base des plâtres ou la chaux commune.

L'invention peut s'appliquer aussi aux matières inorganiques telles que les silicates liquides et les céramiques qui durcissent à la chaleur à haute température.

De préférence, le système inorganique durcissable est une base cimentière, et de ce fait, la description détaillée fera référence essentiellement au ciment et au béton, à des fins de simplicité, étant entendu qu'il ne s'agit en aucun cas de limiter l'invention à ce type de système inorganique durcissable.

### Les nanocharges carbonées

Dans la suite de cette description, on désigne par "nanocharge carbonée" une charge comprenant au moins un élément du groupe formé des nanotubes de carbone, des nanofibres de carbone et des graphènes, ou un mélange de ceux-ci en toutes proportions. Selon l'invention, on préfère utiliser des nanotubes de carbone comme nanocharges carbonées, seuls ou en mélange avec des graphènes.

Les nanotubes de carbone entrant dans la composition du mélange-maître peuvent être du type monoparoi, à double paroi ou à parois multiples. Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456.

Les nanotubes de carbone mis en œuvre selon l'invention ont habituellement un diamètre moyen allant de 0,1 à 200 nm, de préférence de 0,1 à 100 nm, plus préférentiellement de 0,4 à 50 nm et, mieux, de 1 à 30 nm, voire de 10 à 15 nm, et avantageusement une longueur de plus de 0,1 µm et avantageusement de 0,1 à 20 µm, de préférence de 0,1 à 10 µm, par exemple d'environ 6 µm. Leur rapport longueur/diamètre est avantageusement supérieur à 10 et le plus souvent supérieur à 100. Ces nanotubes comprennent donc notamment les nanotubes dits "VGCF" (fibres de carbone obtenues par dépôt chimique en phase vapeur, ou Vapor Grown Carbon Fibers). Leur surface spécifique est par exemple comprise entre 100 et 300 m²/g, avantageusement entre 200 et 300 m²/g, et leur densité apparente peut notamment être comprise entre 0,01 et 0,5 g/cm³ et plus préférentiellement entre 0,07 et 0,2 g/cm³. Les nanotubes de carbone multi-parois peuvent par exemple comprendre de 5 à 15 feuillets et plus préférentiellement de 7 à 10 feuillets.

Ces nanotubes peuvent ou non être traités.

Un exemple de nanotubes de carbone bruts est notamment la dénomination commerciale Graphistrength® C100 de la société Arkema.

Ces nanotubes peuvent être purifiés et/ou traités (par exemple oxydés) et/ou broyés et/ou fonctionnalisés.

Le broyage des nanotubes peut être notamment effectué à froid ou à chaud et être réalisé selon les techniques connues mises en œuvre dans des appareils tels que broyeurs à boulets, à marteaux, à meules, à couteaux, à jet de gaz ou tout autre système de broyage susceptible de réduire la taille du réseau enchevêtré de nanotubes. On préfère que cette étape de broyage soit pratiquée selon une technique de broyage par jet de gaz et en particulier dans un broyeur à jet d'air.

La purification des nanotubes bruts ou broyés peut être réalisée par lavage à l'aide d'une solution d'acide sulfurique, de manière à les débarrasser d'éventuelles impuretés minérales et métalliques résiduelles, comme par exemple le Fer provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés. Les nanotubes peuvent en variante être purifiés par traitement thermique à haute température, typiquement supérieur à 1000°C.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

La fonctionnalisation des nanotubes peut être réalisée par greffage de motifs réactifs tels que des monomères vinyliques à la surface des nanotubes. Le matériau constitutif des nanotubes est utilisé comme initiateur de polymérisation radicalaire après avoir été soumis à un traitement thermique à plus de 900°C, en milieu anhydre et dépourvu d'oxygène, qui est destiné à éliminer les groupes oxygénés de sa surface. Il est ainsi possible de polymériser du méthacrylate de méthyle ou du méthacrylate d'hydroxyéthyle à la surface de nanotubes de carbone.

On utilise de préférence dans la présente invention des nanotubes de carbone bruts éventuellement broyés, c'est-à-dire des nanotubes qui ne sont ni oxydés ni purifiés ni fonctionnalisés et n'ont subi aucun autre traitement chimique et/ou thermique.

Les nanofibres de carbone sont, comme les nanotubes de carbone, des nanofilaments produits par dépôt chimique en phase vapeur (ou CVD) à partir d'une source carbonée qui est décomposée sur un catalyseur comportant un métal de transition (Fe, Ni, Co, Cu), en présence d'hydrogène, à des températures de 500 à 1200°C. Toutefois, ces deux charges carbonées se différencient par leur structure (I. MARTIN-GULLON et al., Carbon 44 (2006) 1572-1580). En effet, les nanotubes de carbone sont constitués d'un ou plusieurs feuillets de graphène enroulés manière concentrique autour de l'axe de la fibre pour former un cylindre ayant un diamètre de 10 à 100 nm. Au contraire, les nanofibres de carbone se composent de zones graphitiques plus ou moins organisées (ou empilements turbostratiques) dont les plans sont inclinés à des angles variables par rapport à l'axe de la fibre. Ces empilements peuvent prendre la forme de plaquettes, d'arêtes de poisson ou de coupelles empilées pour former des structures ayant un diamètre allant généralement de 100 nm à 500 nm voire plus.

Par ailleurs, on préfère utiliser des nanofibres de carbone ayant un diamètre de 100 à 200 nm, par exemple d'environ 150 nm (VGCF® de SHOWA DENKO), et avantageusement une longueur de 100 à 200 µm.

Par graphène, on désigne un feuillet de graphite plan, isolé et individualisé, mais aussi, par extension, un assemblage comprenant entre un et quelques dizaines de feuillets et présentant une structure plane ou plus ou moins ondulée. Cette définition englobe donc les FLG (Few Layer Graphene ou graphène faiblement empilé), les NGP (Nanosized Graphene Plates ou plaques de graphène de dimension nanométrique), les CNS (Carbon NanoSheets ou nano-feuilles de graphène), les GNR (Graphene NanoRibbons ou nano-rubans de graphène). Elle exclut en revanche les nanotubes et nanofibres de carbone, qui sont respectivement constitués de l'enroulement d'un ou plusieurs feuillets de graphène de manière coaxiale et de l'empilement turbostratique de ces feuillets. On préfère par ailleurs que le graphène utilisé selon l'invention ne soit pas soumis à une étape supplémentaire d'oxydation chimique ou de fonctionnalisation.

Le graphène utilisé selon l'invention est obtenu par dépôt chimique en phase vapeur ou CVD, de préférence selon un procédé utilisant un catalyseur pulvérulent à base d'un oxyde mixte. Il se présente, de façon caractéristique, sous forme de particules d'une épaisseur de moins de 50 nm, de préférence de moins de 15 nm, plus préférentiellement de moins de 5 nm et de dimensions latérales inférieures au micron, de préférence de 10 nm à moins de 1000 nm, plus préférentiellement de 50 à 600 nm, voire de 100 à 400 nm. Chacune de ces particules renferme en général de 1 à 50 feuillets, de préférence de 1 à 20 feuillets et plus préférentiellement de 1 à 10 feuillets, voire de 1 à 5 feuillets qui sont susceptibles d'être désolidarisés les uns des autres sous la forme de feuillets indépendants, par exemple lors d'un traitement par ultrasons.

### Les superplastifiants

L'emploi de superplastifiants/haut réducteur d'eau permet de réduire l'eau du béton à consistance égale entraînant la suppression d'un volume important non mobilisé par l'eau nécessaire à l'hydratation du ciment. L'ajout d'un superplastifiant à hauteur de 1 à 2% du poids de ciment permet de réduire significativement le volume d'eau nécessaire. La présence d'un superplastifiant permet ainsi d'augmenter la compacité et la résistance mécanique des bétons et mortiers, tout en améliorant leur fluidité et leur mise en œuvre. Ainsi, la teneur en superplastifiant sera adaptée en fonction de l'utilisation finale du système inorganique durcissable ; par exemple dans le cas d'un béton base ciment fluide destiné à des injections, la teneur en superplastifiant sera plus importante afin de rendre le béton pompable.

Compte tenu des propriétés apportées lors de l'utilisation d'un superplastifiant, ces produits se sont maintenant imposés dans les domaines de la construction, du bâtiment et des forages pétroliers.

Comme exemples de superplastifiant utilisable, on peut citer :
- les sels sulfonés de polycondensés de naphtalène et de formaldéhyde, couramment appelés les polynaphtalènes sulfonates ou encore les superplastifiants à base de naphtalène ;
- les sels sulfonés de polycondensés de mélamine et de formaldéhyde, appelés couramment les superplastifiants à base de mélamine ;
- les lignosulfonates ayant de très faibles teneurs en sucre ;
- les polyacrylates ;
- les produits à base d'acides polycarboxyliques, notamment les sels de polycarboxylate de polyéther ;
- et leurs solutions aqueuses correspondantes.

On utilise notamment les superplastifiants à base de naphtalène, tels que les produits de condensation de l'acide naphtalène sulfurique avec le formaldéhyde qui comprennent des oligomères de naphtalène méthyle sulfonate et naphtalène sulfonate de sodium, ou les superplastifiants de la famille des lignosulfonates de sodium modifiés, ou de la famille des acides polycarboxyliques, notamment les sels de polycarboxylate de polyéther, ou encore de la famille des copolymères acryliques.

On peut utiliser par exemple les produits commerciaux MEGALIT C-3, SUPERPLAST C-3 ou POLYPLAST SP-1, les produits de la gamme ETHACRYL ou le produit XP 1824 de Coatex.

Les superplastifiants sont généralement disponibles commercialement sous forme de solution aqueuse plus ou moins visqueuse de viscosité plus ou moins élevée.

### Le mélange-maître

Selon la présente invention, on appelle mélange-maître, une matrice d'au moins un superplastifiant dans laquelle sont dispersées des nanocharges carbonées, à des teneurs allant de 0,1% à 25%, de préférence de 0,2% à 20%, par rapport au poids total du mélange-maître, l'aspect physique du mélange-maître variant selon le taux de nanocharges carbonées.

Un mélange-maître comprenant de 0,1 à 1% de nanocharges carbonées peut être assimilé à un superplastifiant dopé avec des nanocharges carbonées.

Ainsi, un mélange-maître sous forme solide comprend généralement de 10% à 25% de nanocharges carbonées ; dans ce cas, le taux d'extrait sec, hormis la teneur en nanocharges carbonées, est généralement compris entre 30% et 40%.

Un mélange-maître sous forme de composition pâteuse comprend généralement de 2% à 10% de nanocharges carbonées. Les mélanges-maîtres à faible teneur en nanocharges carbonées, de 0,1% à 2%, se présentent généralement sous la forme de liquides visqueux.

Les mélange-maîtres sous forme de pâte ou de liquide visqueux, comprenant de 0,1% à environ 10% de nanocharges carbonées présentent un extrait sec, hormis la teneur en nanocharges carbonées, généralement compris entre 30% et 50%, de préférence entre 35% et 40%.

Par composition pâteuse, on entend une composition présentant une viscosité Brookfield allant de 100 à 25000 mPa.s, de préférence allant de 400 à 15000 mPa.s.

Le mélange-maître peut contenir en outre un agent dispersant hydrosoluble, utilisé pour améliorer la dispersion des nanocharges carbonées ainsi que sa stabilité dans le temps.

Par « agent dispersant hydrosoluble », on entend au sens de la présente invention, un composé permettant une dispersion homogène des nanocharges dans le superplastifiant, sans conduire à une viscosité trop élevée lors de sa préparation ainsi que la réduction de l'effet de moussage lors des étapes de mélangeage. Il s'agit d'un additif modificateur de rhéologie présentant des propriétés d'antimousse.

L'agent dispersant hydrosoluble selon l'invention est lié aux nanocharges, soit de façon covalente, soit de façon non covalente.

Dans le cas où l'agent dispersant hydrosoluble est lié aux nanocharges de façon non covalente, il pourra être choisi parmi les tensioactifs essentiellement non ioniques.

Par « tensioactif essentiellement non ionique » on entend, au sens de la présente invention, un composé amphiphile non ionique, cité par exemple dans l'ouvrage McCUTCHEON'S 2008 « Emulsifiers and Detergents », et ayant de préférence une HLB (balance hydrophile-lipophile) de 13 à 16, ainsi que les copolymères blocs renfermant des blocs hydrophiles et des blocs lipophiles et présentant une ionicité faible, par exemple 0% à 10% en poids de monomère ionique et 90% à 100% de monomère non ionique.

Par exemple dans le cadre de la présente invention, les dispersants hydrosolubles liés de façon non covalente aux nanocharges peuvent être choisis parmi :
(i) les esters de polyols, en particulier :
   - les esters d'acide gras et de sorbitane, éventuellement polyéthoxylés, par exemple des tensioactifs de la famille des Tween®,
   - les esters d'acides gras et de glycérol,
   - les esters d'acides gras et de sucrose,
   - les esters d'acides gras et de polyéthylèneglycol,
(ii) les polysiloxanes modifiés polyéthers,
(iii) les éthers d'alcools gras et de polyéthylèneglycol, par exemple des tensioactifs de la famille des Brij®,
(iv) les alkylpolyglycosides,
(v) les copolymères blocs polyéthylène-polyéthylèneglycol.

Dans le second cas où l'agent dispersant hydrosoluble est lié aux nanocharges de façon covalente, il s'agit de préférence d'un groupement hydrophile, avantageusement d'un groupement polyéthylèneglycol greffé sur les nanocharges.

On peut citer comme exemples de produits commerciaux utilisables, l'agent mouillant et dispersant, TEGO® 750W d'Evonik ou l'additif Rhéalis™ DFoam commercialisé par Coatex.

### Procédé de préparation du mélange-maître selon l'invention

Le mélange-maître peut être préparé en une seule étape (i), par malaxage dans un malaxeur de nanocharges carbonées avec au moins un superplastifiant, éventuellement en présence d'un agent dispersant hydrosoluble.

Selon un premier mode de mise en œuvre de l'invention, le mélange-maître est concentré et solide et peut être mis en forme par extrusion (étape (ii)), pour être utilisé directement dans l'application envisagée, ou redispersé dans au moins un superplastifiant, identique ou différent du précédent, (étape (iii)) pour former un mélange-maître sous forme de pâte comportant une teneur en nanocharges carbonées inférieure. Selon ce mode de réalisation, il est possible également de redisperser le mélange-maître solide dans un agent dispersant hydrosoluble, ce qui permet d'éviter des problèmes de moussage et de trop forte viscosité lors de cette étape.

Selon un second mode de mise en œuvre de l'invention, le mélange-maître obtenu à l'étape (i) se présente directement sous forme de pâte.

Avantageusement, le mélange-maître sous forme de composition pâteuse est redispersé dans au moins un superplastifiant, conduisant à un superplastifiant (ou mélange de superplastifiants) dopé avec des nanocharges carbonées (étape (iv). Ce mode opératoire permet d'atteindre des teneurs relativement faibles, par exemple de 0,1 à 1%, en nanocharges carbonées parfaitement dispersées de manière homogène dans le superplastifiant, qui est utilisable de façon comparable à un superplastifiant ne comprenant pas de nanocharges carbonées.

Il n'est donc pas nécessaire d'adapter le mode d'introduction du superplastifiant dopé dans les procédés actuels de préparation de béton.

Un mode de réalisation de l'étape i) consiste à procéder au malaxage du mélange par voie de compoundage, avantageusement à l'aide d'une extrudeuse à double vis co-rotative ou contre-rotative ou à l'aide d'un co-malaxeur (notamment de type BUSS®) comprenant un rotor pourvu d'ailettes adaptées à coopérer avec des dents montées sur un stator. Le malaxage peut être réalisé à une température comprise de préférence entre 20°C et 90°C.

Pour l'obtention de la pâte directement, il est possible de prédisperser les nanocharges à l'aide par exemple d'un défloculeur, puis d'utiliser un broyeur à billes conduisant à l'obtention d'une dispersion parfaitement homogène.

L'étape (iii) peut être mise en œuvre à l'aide un mélangeur à pales afin d'obtenir une dispersion homogène, puis passage dans un broyeur à billes pour produire un mélange ne présentant pas de particules de taille supérieure à 10 µm.

L'étape (iv) est réalisée simplement sous agitation normale à l'aide par exemple d'un mélangeur à pales, ou un mélangeur mécanique à basse vitesse.

De préférence, on utilise un superplastifiant de même nature dans les différentes étapes du procédé de préparation.

L'invention a pour objet le mélange-maître susceptible d'être ainsi obtenu selon les différentes variantes du procédé de préparation, et comprenant des nanocharges carbonées à un taux massique compris entre 0,1% et 25%, de préférence entre 0,2% et 20%, ou allant de 0,1% à 1%, par rapport au poids total du mélange-maître, ledit mélange-maître pouvant comprendre en outre un dispersant hydrosoluble tel que défini précédemment.

### Utilisation du mélange-maître pour introduire des nanocharges carbonées

Le procédé d'introduction de nanocharges carbonées dans le ciment selon l'invention consiste à introduire avec les dispositifs classiques, le mélange-maître, et l'eau qui sera utilisée lors de l'opération de gâchage, séparément ou en mélange, directement dans l'appareillage de malaxage, tel qu'une bétonnière, comprenant le ciment.

Le système inorganique durcissable, tel qu'un ciment est généralement mélangé au préalable avec un matériau tel que du sable, dans un rapport ciment/sable de l'ordre de 1 : 3. Sans que la Demanderesse soit liée à une quelconque théorie, elle pense que la présence des nanocharges carbonées facilite la formation d'une couche interfaciale entre le sable et le ciment, en conséquence, les interfaces deviennent plus compactes et diminuent l'apparition de fissures et de crevasses.

Selon un mode de réalisation de l'invention, le système inorganique durcissable, tel qu'un ciment, est mélangé au préalable à sec avec des billes de verre creuses, éventuellement traitées avec un composé organique par exemple de type silane, comme décrit par exemple dans les documents RU 2267004 ou RU 2313559. Dans ce cas, le rapport massique ciment/billes va de 1:0,2 à 1:1. Ce mode de réalisation est particulièrement intéressant pour les bétons destinés à des applications de forage pour permettre une bonne adhésion avec les structures de roches et des puits et une amélioration de la tenue à la perforation.

Selon le procédé de l'invention, la teneur en nanocharges carbonées va de 0,0001% à 0,02% (1 à 200 ppm), de préférence de 0,0005% à 0,01% (5 à 100 ppm) en poids par rapport au système inorganique durcissable, plus préférentiellement de 0,0005% à 0,005% (5 à 50 ppm) et le rapport massique eau/système inorganique durcissable est compris entre 0,2 et 1,5, de préférence entre 0,2 et 0,7, et de préférence de 1 à 1,5 dans le cas particulier des bétons destinés à être injectés. Dans ces systèmes, la teneur en superplastifiant est comprise entre 0,1 et 1,5% massique, de préférence entre 0,2 et 1% massique par rapport au ciment.

Les matériaux composites à base des systèmes inorganiques durcissables obtenus suivant le procédé selon l'invention présentent des propriétés améliorées liées à la présence des nanocharges carbonées : augmentation de la tenue à la compression, augmentation de la tenue à la flexion, diminution du retrait endogène, augmentation de la tenue au froid et aux différences de température, accélération de l'hydratation du ciment.

Selon l'invention, la mise en œuvre d'un mélange-maitre comprenant des nanocharges carbonées dans une matrice de superplastifiant simplifie le mode d'introduction directe des nanocharges carbonées.

Ainsi, le procédé selon l'invention est particulièrement bien adapté pour la préparation de bétons plus denses et renforcés mécaniquement, la préparation de béton cellulaire ou la préparation de plâtres.

Selon l'invention, l'utilisation de nanocharges carbonées sous forme de mélange-maître dans un superplastifiant, permet d'améliorer significativement la résistance au gel et la diffusion de liquide de systèmes inorganiques durcissables, tels que les bétons, d'améliorer l'adhésion entre le béton et les armatures métalliques ou non métalliques ou les renforts sous la forme de fibres minérales ou les renforts à base de polymères dans des produits de construction structuraux, et/ou de réduire les phénomènes de micro fissuration dus aux diverses contraintes dans des produits de construction structuraux.

Les matériaux composites à base des systèmes inorganiques durcissables obtenus selon l'invention sont destinés aux domaines de la construction et du bâtiment pour préparer des mortiers pour maçonneries, enduits intérieurs et extérieurs, pour fabriquer des produits de construction structuraux, mais aussi au domaine de l'industrie pétrolière pour les applications de forage.

L'invention sera maintenant illustrée par les exemples suivants, qui n'ont pas pour but de limiter la portée de l'invention, définie par les revendications annexées. Dans les exemples, les pourcentages sont des pourcentages massiques.

### PARTIE EXPERIMENTALE

### Exemple 1 : Préparation d'un mélange maître concentré solide selon l'invention

Des nanotubes de carbone NTC (Graphistrength® C100 d'Arkema) ont été introduits dans la première trémie d'alimentation d'un co-malaxeur BUSS® MDK 46 (L/D = 11), équipé d'une vis d'extrusion de reprise et d'un dispositif de granulation.

Une solution aqueuse à 25% de copolymère acrylique (XP 1824 de Coatex) additivée avec 1% de NaOH a été injectée sous forme liquide à 40°C dans la 1ère zone du co-malaxeur. Les consignes de température et le débit au sein du co-malaxeur étaient les suivantes : Zone 1 : 40°C ; Zone 2 : 40°C ; Vis : 30°C ; débit : 15 kg/h.

On a obtenu un mélange-maître sous forme solide contenant 20% en masse de NTC dans lequel les agrégats de NTC sont bien dispersés dans le superplastifiant XP 1824.

### Exemple 2 : Préparation d'un mélange maître sous forme de composition pâteuse selon l'invention

On a utilisé le mélange-maître obtenu dans l'exemple 1 et un sel de sodium de polyéther polycarboxylate en solution aqueuse (Ethacryl® HF) pour préparer une dispersion en solution aqueuse contenant :

| | |
|---|---|
| NTC | 2,5% |
| Mélange Ethacryl HF/XP 1824 sec | 37,48% |
| NaOH | 0,12% |
| Eau | 59,9%, |

Rapport NTC/Ethacryl HF sec = 0,071

Pour cela, le mélange-maître (125g) a été ajouté progressivement dans 875g d'Ethacryl HF (solution aqueuse à 40%) dans un défloculeur (pales 70 mm) et le mélange a été soumis à une agitation (1550 rpm) pendant 3 heures.

Puis la dispersion obtenue, contenant des particules de taille de l'ordre de 100µm, a été soumise à un traitement dans un broyeur à billes avec chambre horizontale (Dispermat-SL-M25).
Les paramètres utilisés sont :
Chambre de 250 ml remplie avec 200 ml de billes en céramique 1,2 - 1,7 mm,
Chambre de contrepression : 240 ml eau
Vitesse 4000 rpm / pompe 42% / 750 W (puissance mesurée) / 14,2 m/s / 2,5 Nm Refroidissement des chambres du broyeur à billes avec l'eau du réseau (20°C) Circulation du produit en canard pendant 10 mn.

On a récupéré environ 800 g d'une composition pâteuse à 2,5% de NTC ne présentant pas de particules de taille supérieure à 10µm.
Le broyeur à billes a été nettoyé et rincé par circulation en canard avec de l'eau jusqu'à ce que l'eau soit claire.

### Exemple 3 : Préparation d'un mélange maître sous forme de composition pâteuse selon l'invention

On a utilisé le mélange-maître obtenu dans l'exemple 1 et un agent dispersant en solution aqueuse (TEGO 750 W) pour préparer directement une composition pâteuse à 2,5% de NTC. La dispersion a été obtenue à partir de :

| | |
|---|---|
| TEGO 750 W (à 40% de sec) | 110 parties |
| Mélange-maître de l'exemple 1 | 20 parties |
| Eau | 30 parties |

La dispersion a été réalisée dans un défloculeur à pales 70 mm pendant 3 heures.

Après 3 heures, la dispersion mousse légèrement et la viscosité Kreps mesurée à l'aide d'un viscosimètre Lamy Rheology (mesure à 30 secondes à 200T/min) est 90 KU (soit 1200 mPa.s) à 20°C. A t+1 jour après la dispersion, la dispersion a complètement démoussé et la viscosité mesurée est 64 KU (soit 390 mPa.s) à 20°C.

La pâte ainsi préparée peut être utilisée facilement pour doper un superplastifiant.

### Exemple 4 : Préparation d'un mélange maître sous forme de composition pâteuse selon l'invention

Dans cet exemple, on a préparé directement une composition pâteuse par dispersion de NTC dans un superplastifiant, à l'aide d'un broyeur à billes, selon le mode opératoire suivant :
Dans un pot de 2 litres :
- Introduction de
   625 g d'Ethacryl HF (40% sec)
   350 g d'eau
   25 g de NTC Graphistrength C100 pesés sous hotte adaptée pour la pesée des NTC ;
- Prédispersion au mélangeur à pales 70 mm pendant 2 à 3 heures sous agitation à 1500 rpm;
- Passage de cette prédispersion au Broyeur à Billes
- Contrôle de la qualité de dispersion avec barre de North (particules < 10µm) et observation visuelle entre lame-lamelle après dilution à 1% équivalent NTC.

La dispersion est correcte en sortie du broyeur dès le premier passage, on a récupéré environ 800 g de pâte contenant 2,5% de NTC dispersés dans l'Ethacryl HF.

### Exemple 5 : Incorporation de NTC dans un béton de référence base ciment Portland

La composition pâteuse à 2,5% de NTC obtenue dans l'exemple 2 a été introduite dans de l'Ethacryl HF commercial sous agitation dans un mélangeur type défloculeur (400 tours par minute à température ambiante pendant quelques minutes) de façon à doper le superplastifiant avec 0,25% de NTC. On obtient un superplastifiant dopé à 0,25% de NTC qui est un liquide visqueux homogène et stable.

Le superplastifiant dopé est directement utilisable pour la préparation de béton.

On a préparé un béton à partir de 450g de ciment de type CEM II, index 32,5, mélangé avec 1350g de sable de quartz (proportion 1 : 3 en poids).
4,5 g d'Ethacryl HF dopé avec 0,25% de NTC ont été introduits dans 160 g d'eau.

Le mélange du ciment/sable avec l'eau additivée d'Ethacryl HF dopé est effectué directement dans la bétonnière pendant 3 minutes. Le rapport eau/ciment est de 0,36. Le rapport Ethacryl HF dopé / ciment est de 1%. La teneur en NTC dans le ciment est de 25 ppm.

Selon le même mode opératoire, on a préparé un béton tel que le rapport Ethacryl HF dopé / ciment est de 0,2% et la teneur en NTC dans le ciment est de 5 ppm.

Des bétons comparatifs ont été préparés en utilisant de l'Ethacryl HF commercial non dopé.

Chaque béton préparé ainsi a été mis dans des préformes de dimension 40x40x160 mm densifiées sur une plate-forme vibrante durant 3 min. Puis, le béton a été conservé dans les préformes à 20°C et avec une humidité relative 100% pendant 24 heures.

Ensuite, les échantillons ont été sortis des préformes et ils ont été conditionnés dans les mêmes conditions pendant 27 jours.

Des tests mécaniques en compression et en flexion ont été réalisés sur ces échantillons à la 28ème journée de conditionnement, suivant la méthode suivante : GOST 310.4-81 ("Cements. Methods of bending and compression strength détermination").

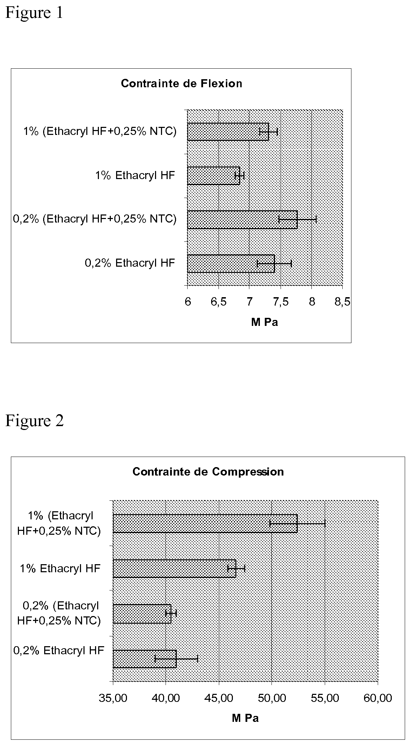

Les résultats sont donnés sous forme de graphique dans les figures 1 et 2.
La figure 1 représentant la tenue en flexion du béton (exprimée en MPa) montre l'amélioration de cette propriété lorsque l'on utilise un superplastifiant dopé avec 0,25% de NTC, comparativement au superplastifiant commercial. Avec 0,2% d'Ethacryl dopé, représentant l'ajout de 5 ppm de NTC par rapport au ciment, la contrainte de flexion est supérieure à celle obtenue avec 1% d'Ethacryl HF commercial.
La figure 2 représentant la tenue à la compression du béton (exprimée en MPa) montre l'amélioration de cette propriété lorsque l'on utilise un superplastifiant dopé avec 0,25% de NTC, comparativement au superplastifiant commercial. Avec 25 ppm de NTC dans le ciment introduit par le superplastifiant dopé, on obtient une amélioration de plus de 10% pour la contrainte de compression.

## Revendications

1. Procédé de préparation d'un mélange maître comprenant au moins un superplastifiant et de 0,1% à 25% en masse de nanocharges carbonées exprimés par rapport au poids total du mélange-maître, comprenant :
(i) l'introduction dans un malaxeur, puis le malaxage, de nanocharges carbonées et d'au moins un superplastifiant, éventuellement en présence d'un agent dispersant hydrosoluble, pour former un mélange homogène sous forme solide ou sous forme de composition pâteuse ;
(ii) l'extrusion dudit mélange sous forme solide pour obtenir un mélange-maître sous forme solide ;
(iii) éventuellement, la dispersion dudit mélange-maître sous forme solide dans un superplastifiant identique ou différent de celui de l'étape (i), ou dans un dispersant hydrosoluble , pour obtenir un mélange maître sous forme d'une composition pâteuse ;
(iv) éventuellement, l'introduction du mélange maître sous forme d'une composition pâteuse obtenu à l'étape (i) ou à l'étape (iii), dans un superplastifiant, identique ou différent de celui de l'étape (i) ou de celui de l'étape (iii), pour obtenir un mélange maître comprenant de 0,1% à 2% en masse de nanocharges carbonées.

2. Procédé selon la revendication 1 **caractérisé en ce que** les nanocharges carbonées sont des nanotubes de carbone, seuls ou en mélange avec des graphènes.

3. Procédé selon la revendication 1 ou 2 **caractérisé en ce que** le superplastifiant est choisi parmi les :
- les sels sulfonés de polycondensés de naphtalène et de formaldéhyde ;
- les sels sulfonés de polycondensés de mélamine et de formaldéhyde ;
- les lignosulfonates ayant de très faibles teneurs en sucre ;
- les polyacrylates ;
- les sels de polycarboxylate de polyéther ;
- et leurs solutions aqueuses correspondantes.

4. Procédé selon l'une quelconque des revendications précédentes **caractérisé en ce que** le dispersant hydrosoluble est lié de façon non covalente aux nanocharges carbonées et est choisi parmi les tensioactifs non ioniques, tels que :
(i) les esters de polyols, en particulier :
- les esters d'acide gras et de sorbitane, éventuellement polyéthoxylés,
- les esters d'acides gras et de glycérol,
- les esters d'acides gras et de sucrose,
- les esters d'acides gras et de polyéthylèneglycol,
(ii) les polysiloxanes modifiés polyéthers,
(iii) les éthers d'alcools gras et de polyéthylèneglycol,
(iv) les alkylpolyglycosides, et
(v) les copolymères blocs polyéthylène-polyéthylèneglycol.

5. Procédé selon l'une quelconque des revendications précédentes, **caractérisé en ce que** l'étape (i) conduit directement à la préparation d'un mélange-maître sous forme d'une composition pâteuse.

6. Procédé selon l'une quelconque des revendications précédentes, **caractérisé en ce que** le superplastifiant est identique dans toutes les étapes.

7. Mélange-maître sous forme solide comprenant au moins un superplastifiant et des nanocharges carbonées à un taux massique allant de 10% à 25%, par rapport au poids total du mélange-maître, susceptible d'être obtenu selon le procédé selon l'une quelconque des revendications précédentes.

8. Mélange-maître sous forme de pâte ou de liquide visqueux comprenant de 0,1% à 10% en masse de nanocharges carbonées par rapport au poids total du mélange-maître, et présentant un taux d'extrait sec hormis la teneur en nanocharges carbonées compris entre 30% et 50%, susceptible d'être obtenu selon l'une quelconque des revendications 1 à 6.

9. Mélange-maître selon la revendication 7 ou 8 **caractérisé en ce qu'**il comprend un dispersant hydrosoluble.

10. Procédé d'introduction de nanocharges carbonées dans un système inorganique durcissable, comprenant au moins l'étape d'introduction d'eau, et d'un mélange maître selon l'une quelconque des revendications 7 à 9, séparément ou en mélange, directement dans un appareillage de malaxage comprenant au moins un système inorganique durcissable, pour assurer une teneur en nanocharges carbonées allant de 0,0001% à 0,02%, de préférence de 0,0005% à 0,01% en poids par rapport au système inorganique durcissable, et un rapport massique eau/système inorganique durcissable allant de 0,2 à 1,5, de préférence de 0,2 à 0,7.

11. Procédé selon la revendication 10 **caractérisé en ce que** le système inorganique durcissable est une base cimentière, comme décrit dans la norme EN-197-1-2000, en particulier le ciment type Portland, le ciment Portland composé par exemple au calcaire, au laitier, aux cendres volantes, à la pouzzolane, au schiste calciné, à la fumée de silice, le ciment de haut fourneau, le ciment pouzzolanique, le ciment de magnésium, ou autre ciment base anhydrite tel que le ciment fluoroanhydrite, utilisés seuls ou en mélange, ou le gypse, la chaux commune, un silicate liquide ou une céramique.

12. Procédé selon la revendication 10 ou 11 **caractérisé en ce que** le système inorganique durcissable est un ciment, mélangé éventuellement avec un matériau tel que du sable ou des billes de verre creuses.

13. Matériau composite à base d'un système inorganique durcissable susceptible d'être obtenu suivant le procédé selon l'une quelconque des revendications 10 à 12.

14. Utilisation du matériau selon la revendication 13 dans le domaine de la construction et du bâtiment pour préparer des mortiers pour maçonneries, enduits intérieurs et extérieurs, pour fabriquer des produits de construction structuraux, et dans le domaine de l'industrie pétrolière pour les applications de forage.

15. Utilisation du mélange-maître selon l'une quelconque des revendications 7 à 9, pour améliorer la résistance au gel et à la diffusion de liquide d'un système inorganique durcissable, tel qu'un ciment, ou pour améliorer l'adhésion entre un système inorganique durcissable et les armatures métalliques ou non métalliques ou les renforts sous la forme de fibres minérales ou les renforts à base de polymères dans des produits de construction structuraux, ou pour réduire les phénomènes de microfissuration dus aux diverses contraintes dans des produits de construction structuraux.

## Patentansprüche

1. Verfahren zur Herstellung eines Mastermix, der mindestens ein Superplastifizierungsmittel und 0,1 bis 25 Massen-% Nanofüllstoffe auf Kohlenstoffbasis, ausgedrückt in Bezug auf das Gesamtgewicht des Mastermix, umfasst, umfassend:
(i) Einbringen von Nanofüllstoffen auf Kohlenstoffbasis und mindestens einem Superplastifizierungsmittel in einen Mischer und deren anschließendes Mischen, gegebenenfalls in Gegenwart eines wasserlöslichen Dispergiermittels, zur Herstellung eines homogenen Gemischs in fester Form oder in Form einer pastösen Zusammensetzung,
(ii) Extrusion des Gemischs in fester Form zum Erhalten eines Mastermix in fester Form,
(iii) gegebenenfalls Dispergieren des Mastermix in fester Form in einem Superplastifizierungsmittel, das mit demjenigen von Schritt (i) identisch oder davon verschieden ist, oder in einem wasserlöslichen Dispergiermittel zum Erhalten eines Mastermix in Form einer pastösen Zusammensetzung,
(iv) gegebenenfalls Einbringen des in Schritt (i) oder Schritt (iii) erhaltenen Mastermix in Form einer pastösen Zusammensetzung in ein Superplastifizierungsmittel, das mit demjenigen von Schritt (i) oder demjenigen von Schritt (iii) identisch oder davon verschieden ist, zum Erhalten eines Mastermix, der 0,1 bis 2 Massen-% Nanofüllstoffe auf Kohlenstoffbasis umfasst.

2. Verfahren nach Anspruch 1, **dadurch gekennzeichnet, dass** es sich bei den Nanofüllstoffen auf Kohlenstoffbasis um Kohlenstoff-Nanoröhrchen, allein oder im Gemisch mit Graphenen, handelt.

3. Verfahren nach Anspruch 1 oder 2, **dadurch gekennzeichnet, dass** das Superplastifizierungsmittel aus den folgenden ausgewählt wird:
- Sulfonsäuresalzen von Polykondensaten von Naphthalin und Formaldehyd,
- Sulfonsäuresalzen von Polykondensaten von Melamin und Formaldehyd,
- Lignosulfonaten mit sehr kleinen Zuckergehalten,
- Polyacrylaten,
- Salzen von Polyetherpolycarboxylat
- und ihren entsprechenden wässrigen Lösungen.

4. Verfahren nach einem der vorhergehenden Ansprüche, **dadurch gekennzeichnet, dass** das wasserlösliche Dispergiermittel nichtkovalent an die Nanofüllstoffe auf Kohlenstoffbasis gebunden ist und aus nichtionischen Tensiden ausgewählt wird, wie:
(i) Estern von Polyolen, insbesondere:
- gegebenenfalls polyethoxylierten Estern von Fettsäure und Sorbitan,
- Estern von Fettsäuren und Glycerin,
- Estern von Fettsäuren und Saccharose,
- Estern von Fettsäuren und Polyethylenglykol,
(ii) Polyether-modifizierten Polysiloxanen,
(iii) Ethern von Fettalkoholen und Polyethylenglykol,
(iv) Alkylpolyglykosiden und
(v) Polyethylen-Polyethylenglykol-Blockcopolymeren.

5. Verfahren nach einem der vorhergehenden Ansprüche, **dadurch gekennzeichnet, dass** Schritt (i) direkt zur Herstellung eines Mastermix in Form einer pastösen Zusammensetzung führt.

6. Verfahren nach einem der vorhergehenden Ansprüche, **dadurch gekennzeichnet, dass** das Superplastifizierungsmittel in allen Schritten dasselbe ist.

7. Mastermix in fester Form, umfassend mindestens ein Superplastifizierungsmittel und Nanofüllstoffe auf Kohlenstoffbasis in einem Massenanteil von 10% bis 25%, bezogen auf das Gesamtgewicht des Mastermix, der nach dem Verfahren nach einem der vorhergehenden Ansprüche erhalten werden kann.

8. Mastermix in Form einer Paste oder viskosen Flüssigkeit, umfassend 0,1 bis 10 Massen-% Nanofüllstoffe auf Kohlenstoffbasis, bezogen auf das Gesamtgewicht des Mastermix, und mit einem Trockensubstanzanteil neben dem Gehalt an Nanofüllstoffen auf Kohlenstoffbasis zwischen 30% und 50%, der nach einem der Ansprüche 1 bis 6 erhalten werden kann.

9. Mastermix nach Anspruch 7 oder 8, **dadurch gekennzeichnet, dass** er ein wasserlösliches Dispergiermittel umfasst.

10. Verfahren zum Einbringen von Nanofüllstoffen auf Kohlenstoffbasis in ein härtbares anorganisches System, umfassend mindestens einen Schritt des Einbringens von Wasser und eines Mastermix nach einem der Ansprüche 7 bis 9, getrennt oder im Gemisch, direkt in eine Mischvorrichtung, die mindestens ein härtbares anorganisches System umfasst, wobei ein Gehalt an Nanofüllstoffen auf Kohlenstoffbasis von 0,0001 bis 0,02 Gew.-%, vorzugsweise von 0,0005 bis 0,01 Gew.-%, bezogen auf das härtbare anorganische System, und ein Massenverhältnis von Wasser zu härtbarem anorganischem System von 0,2 bis 1,5, vorzugsweise von 0,2 bis 0,7, sichergestellt wird.

11. Verfahren nach Anspruch 10, **dadurch gekennzeichnet, dass** das härtbare anorganische System eine Zementbasis ist, wie in der Norm EN-197-1-2000 beschrieben, insbesondere Zement des Portlandtyps, Portlandzement, der zum Beispiel aus Kalk, Schlacke, Flugaschen, Pozzolan, gebranntem Schiefer, Mikrosilika besteht, Hochofenzement, Pozzolanzement, Magnesiumzement oder sonstiger Zement auf Anhydritbasis, wie Flusssäureanhydritzement, allein oder im Gemisch verwendet, oder Gips, gewöhnlicher Kalk, ein flüssiges Silikat oder eine Keramik.

12. Verfahren nach Anspruch 10 oder 11, **dadurch gekennzeichnet, dass** das härtbare anorganische System ein Zement ist, der gegebenenfalls mit einem Material, wie Sand oder Hohlglaskügelchen, gemischt ist.

13. Verbundmaterial auf der Basis eines härtbaren anorganischen Systems, das nach dem Verfahren nach einem der Ansprüche 10 bis 12 erhalten werden kann.

14. Verwendung des Materials nach Anspruch 13 im Bau- und Hochbaubereich zur Herstellung von Mörteln für Maurerarbeiten, Innen- und Außenputzen, zur Herstellung struktureller Bauprodukte und im Bereich der Ölindustrie für Bohranwendungen.

15. Verwendung des Mastermix nach einem der Ansprüche 7 bis 9 zur Verbesserung der Beständigkeit eines härtbaren anorganischen Systems, wie eines Zements, gegen Frost und gegen Flüssigkeitsdiffusion oder zur Verbesserung der Haftung zwischen einem härtbaren anorganischen System und metallischen oder nicht metallischen Bewehrungen oder Verstärkungen in Form von Mineralfasern oder Verstärkungen auf der Basis von Polymeren in strukturellen Bauprodukten oder zur Verringerung von Mikrorissphänomenen aufgrund verschiedener Spannungen in strukturellen Bauprodukten.

## Claims

1. Process for the preparation of a master batch comprising at least one superplasticizer and from 0.1% to 25% by weight of carbon-based nanofillers, expressed with respect to the total weight of the master batch, comprising:
(i) the introduction into a kneader and then the kneading of carbon-based nanofillers and of at least one superplasticizer, optionally in the presence of a water-soluble dispersing agent, in order to form a homogeneous mixture in the solid form or in the pasty composition form;
(ii) the extrusion of said mixture in the solid form in order to obtain a master batch in the solid form;
(iii) optionally the dispersion of said master batch in the solid form in a superplasticizer identical to or different from that of stage (i), or in a water-soluble dispersant, in order to obtain a master batch in the form of a pasty composition;
(iv) optionally the introduction of the master batch in the form of a pasty composition obtained in stage (i) or in stage (iii) into a superplasticizer which is identical to or different from that of stage (i) or that of stage (iii), in order to obtain a master batch comprising from 0.1% to 2% by weight of carbon-based nanofillers.

2. Process according to Claim 1, **characterized in that** the carbon-based nanofillers are carbon nanotubes, alone or as a mixture with graphenes.

3. Process according to Claim 1 or 2, **characterized in that** the superplasticizer is chosen from:
- sulfonated salts of polycondensates of naphthalene and formaldehyde;
- sulfonated salts of polycondensates of melamine and formaldehyde;
- lignosulfonates having very low sugar contents;
- polyacrylates;
- polyether polycarboxylate salts;
- and their corresponding aqueous solutions.

4. Process according to any one of the preceding claims, **characterized in that** the water-soluble dispersant is noncovalently bonded to the carbon-based nanofillers and is chosen from nonionic surfactants, such as :
(i) esters of polyols, in particular:
- esters of fatty acid and of sorbitan, which are optionally polyethoxylated,
- esters of fatty acids and of glycerol,
- esters of fatty acids and of sucrose,
- esters of fatty acids and of polyethylene glycol,
(ii) polysiloxanes modified by polyethers,
(iii) ethers of fatty alcohols and of polyethylene glycol,
(iv) alkyl polyglycosides, and
(v) polyethylene/polyethylene glycol block copolymers.

5. Process according to any one of the preceding claims, **characterized in that** stage (i) results directly in the preparation of a master batch in the form of a pasty composition.

6. Process according to any one of the preceding claims, **characterized in that** the superplasticizer is identical in all the stages.

7. Master batch in the solid form comprising at least one superplasticizer and carbon-based nanofillers at a content by weight ranging from 10% to 25%, with respect to the total weight of the master batch, capable of being obtained according to the process according to any one of the preceding claims.

8. Master batch in the paste or viscous liquid form comprising from 0.1% to 10% by weight of carbon-based nanofillers, with respect to the total weight of the master batch, and exhibiting a solids content, except for the content of carbon-based nanofillers, of between 30% and 50%, capable of being obtained according to any one of Claims 1 to 6.

9. Master batch according to Claim 7 or 8, **characterized in that** it comprises a water-soluble dispersant.

10. Process for the introduction of carbon-based nanofillers into a curable inorganic system, comprising at least the stage of introduction of water and of a master batch according to any one of Claims 7 to 9, separately or as a mixture, directly into a kneading appliance comprising at least one curable inorganic system, in order to ensure a content of carbon-based nanofillers ranging from 0.0001% to 0.02% by weight, preferably from 0.0005% to 0.01% by weight, with respect to the curable inorganic system, and a water/curable inorganic system ratio by weight ranging from 0.2 to 1.5 and preferably from 0.2 to 0.7.

11. Process according to Claim 10, **characterized in that** the curable inorganic system is a cement base, as described in the standard EN-197-1-2000, in particular Portland-type cement, composite Portland cement, for example with limestone, with slag, with fly ash, with pozzolana, with calcined shale or with silica fume, blast furnace cement, pozzolanic cement, magnesia cement, or other anhydrite-based cement, such as fluoroanhydrite cement, used alone or as a mixture, or gypsum, ordinary lime, a liquid silicate or a ceramic.

12. Process according to Claim 10 or 11, **characterized in that** the curable inorganic system is a cement, optionally mixed with a material such as sand or hollow glass beads.

13. Composite material based on a curable inorganic system capable of being obtained according to the process according to any one of Claims 10 to 12.

14. Use of the material according to Claim 13 in the field of construction and building, for preparing mortars for bricklaying or interior and exterior coatings or for manufacturing structural construction products, and in the field of the oil industry, for drilling applications.

15. Use of the master batch according to any one of Claims 7 to 9, for improving the resistance to freezing and to the diffusion of liquid of a curable inorganic system, such as a cement, or for improving the adhesion between a curable inorganic system and metal or nonmetal reinforcements or reinforcers in the form of mineral fibers or reinforcers based on polymers in structural construction products, or for reducing the phenomena of microcracking due to the various stresses in structural construction products.
